Europäisches Patentamt

European Patent Office

Office européen des brevets

(11) Veröffentlichungsnummer: **0 320 616**
**A2**

(12) **EUROPÄISCHE PATENTANMELDUNG**

(21) Anmeldenummer: 88118554.0

(22) Anmeldetag: 08.11.88

(51) Int. Cl.⁴: **B60B 17/00** , **B61H 5/00** ,
**F16D 65/12**

(30) Priorität: **12.12.87 DE 3742171**

(43) Veröffentlichungstag der Anmeldung:
**21.06.89 Patentblatt 89/25**

(84) Benannte Vertragsstaaten:
**AT CH DE IT LI**

(71) Anmelder: **VEREINIGTE SCHMIEDEWERKE
GMBH
Alleestrasse 70
D-4630 Bochum(DE)**

(72) Erfinder: **Reichel, Hans-Henning, Dr.-Ing.
Heggerstrasse 38
D-4320 Hattingen(DE)**

(74) Vertreter: **Patentanwaltsbüro Cohausz &
Florack
Postfach 14 01 20
D-4000 Düsseldorf 1(DE)**

(54) Scheibengebremstes Vollrad für kleinrädrige Schienenfahrzeuge.

(57) Die Erfindung bezieht sich auf ein scheibengebremstes Vollrad für kleinrädrige Schienenfahrzeuge,
insbesondere Niederflurwagen, bei dem die Reibflächen 4,5 für die Scheibenbremse von den Stirnseiten des Vollrades gebildet werden. Zur Vermeidung
von zu Anrissen führenden Wärmespannungen ist
vorgesehen, daß die beim Bremsen stark erwärmten
Reibflächen 4,5 durch in den Stirnseiten eingelassene Nuten 9,10,11,12 von den benachbarten Bereichen (Spurkranz 8, Nabe 2) thermisch und spannungsmäßig entkoppelt sind.

Fig. 1

EP 0 320 616 A2

## Scheibengebremstes Vollrad für kleinrädrige Schienenfahrzeuge

Die Erfindung bezieht sich auf ein scheibengebremstes Vollrad für kleinrädrige Schienenfahrzeuge, wie Niederflurwagen mit von den Stirnseiten gebildeten Reibflächen für die Scheibenbremse.

Die heute im Einsatz befindlichen scheibengebremsten Räder für Niederflurwagen haben einen Meßkreisdurchmesser von 280 bis 360 mm. Wegen dieser niedrigen Bauhöhe kann man an den Stirnseiten der Räder nur entsprechend klein bemessene Reibflächen für die Scheibenbremse unterbringen. Beim Bremsen, insbesondere beim lang andauernden Bremsen auf Gefällstrecken, kommt es zu einer starken Erwärmung der Reibflächen. Es ist bekannt, daß diese starke Erwärmung sich je nach Bauart des Rades negativ auswirkt.

Sofern die Stirnflächen des Rades als Reibflächen für die Scheibenbremse ausgenutzt werden, besteht die Gefahr, daß die in der Regel auf Achswellen aufgeschrumpften Räder sich infolge der Wärmeausdehnung beim Bremsen lösen. Zur Abhilfe wurde deshalb das Rad einstückig mit der Achswelle ausgebildet. Der Aufwand für die Herstellung eines derartigen Radsatzes ist entsprechend groß (DE-OS 18 16 016). Außerdem entstehen im Übergangsbereich zwischen den beim Bremsen stark erwärmten Reibflächen und dem durch die kalte Schiene ständig gekühlten Bereich der Lauffläche zu Anrissen führende Wärmespannungen.

Bei einer ganz anderen Lösung des Problems der Wärmespannungen wird nicht an den Stirnseiten des Rades, sondern auf der Nabe gebremst. Dieser Lösung liegt die Überlegung zugrunde, daß der Ort der Erwärmung beim Bremsen möglichst weit von dem die Lauffläche umfassenden, äußeren Teil des Rades entfernt liegen muß, weil wegen des ständig durch die kalte Schiene gekühlten Radteils sich an dieser Stelle Anrisse verursachende Wärmespannungen besonders stark ausbilden können. Deshalb ist bei dieser Lösung eine verlängerte Radnabe vorgesehen, deren Außenseite die Reibfläche für die Bremse bildet. Auch wenn man eine Miterwärmung der Radwelle bei dieser Lösung zuläßt, besteht die Gefahr des Lösens des Schrumpfsitzes (DE-PS 28 18 384).

Bei einem anderen bekannten scheibengebremsten, bereiften Rad für Niederflurwagen, bei dem der Radreifen lösbar über einen Konussitz mit dem Radkörper verbunden ist, ist auf der Spurkranzseite des Radkörpers eine angeschraubte Bremsscheibe vorgesehen, während auf der anderen Seite des Radkörpers ein radial nach innen gezogener Kragen des Radreifens die Reibfläche für die Scheibenbremse bildet. Bei diesem Rad wird das Problem der Wärmespannungen also dadurch vermindert, daß auf der einen Seite eine separate Bremsscheibe vorgesehen ist und auf der anderen Seite die Reibfläche nicht einteilig mit dem Radkörper ausgeführt ist, sondern Teil des Radreifens ist. Ein solches Schienenrad ist in seinem konstruktiven Aufbau aufwendig und erfordert bei Schienenrädern nicht gern gesehene achsparallele Bohrungen im Radkörper für Schraubenbolzen, die den Radreifen und die Bremsscheibe am Radkörper verspannt halten (DE-OS 36 03 280 A1).

Der Erfindung liegt die Aufgabe zugrunde, ein scheibengebremstes Vollrad für kleinrädrige Schienenfahrzeuge zu schaffen, das bei einfachem konstruktiven Aufbau möglichst wenig durch Wärmespannungen gefährdet ist.

Diese Aufgabe wird erfindungsgemäß dadurch gelöst, daß die Reibflächen jeweils durch eine oder mehrere Nuten von dem benachbarten äußeren und/oder inneren Teilen des Rades thermisch und spannungsmäßig entkoppelt sind. Vorzugsweise sollte die der spurkranzseitigen Reibfläche zugeordnete Nut als Ringnut ausgebildet sein und zwischen der Reibfläche und dem Spurkranz liegen, weil im Bereich des Spurkranzes die Spannungsgefährdung am größten ist. Weiter kann die Gefahr von unzulässig hohen thermischen Spannungen dadurch vermieden werden, daß auch auf der Nabenseite der spurkranzseitigen Reibfläche eine Ringnut vorgesehen ist. Auf der spurkranzabgewandten Seite reicht es dagegen aus, wenn eine Ringnut zwischen der Reibfläche und der Nabe vorgesehen ist. Alternativ zu den Ringnuten, vorzugsweise aber zusätzlich, können die Reibflächen durch radiale Nuten in mehrere Felder aufgeteilt sein.

Durch die erfindungsgemäßen Merkmale ist es möglich, daß die beim Bremsen gegenüber den durch die Schiene ständig gekühlten laufflächenseitigen Teilen des Vollrades auf eine hohe Temperatur erwärmten Bereiche der Reibflächen sich frei ausdehnen können, so daß das Entstehen von Anrissen wegen zu hoher Spannungen zwischen dem stark erwärmten und den verhältnismäßig kalt bleibenden Teilen des Vollrades vermieden wird. Daraus ergibt sich der weitere Vorteil, daß bei dem Vollrad die Wahl des Radwerkstoffes überwiegend im Hinblick auf den Laufflächenverschleiß des Vollrades und nicht im Hinblick auf thermische Belastungen beim Bremsen erfolgen kann.

Im folgenden wird die Erfindung anhand einer zwei Ausführungsbeispiele darstellenden Zeichnung näher erläutert. Im einzelnen zeigen:

Fig. 1 ein scheibengebremstes Vollrad für Schienenfahrzeuge im axialen Halbschnitt,

Fig. 2 ein scheibengebremstes Vollrad für Schienenfahrzeuge im axialen Halbschnitt in einer zur Fig. 1 abgewandelten Ausführung und

Fig. 3 das scheibengebremste Vollrad für Schienenfahrzeuge gemäß Fig. 2 in schematischer Darstellung als Ansicht der Radkranzseite.

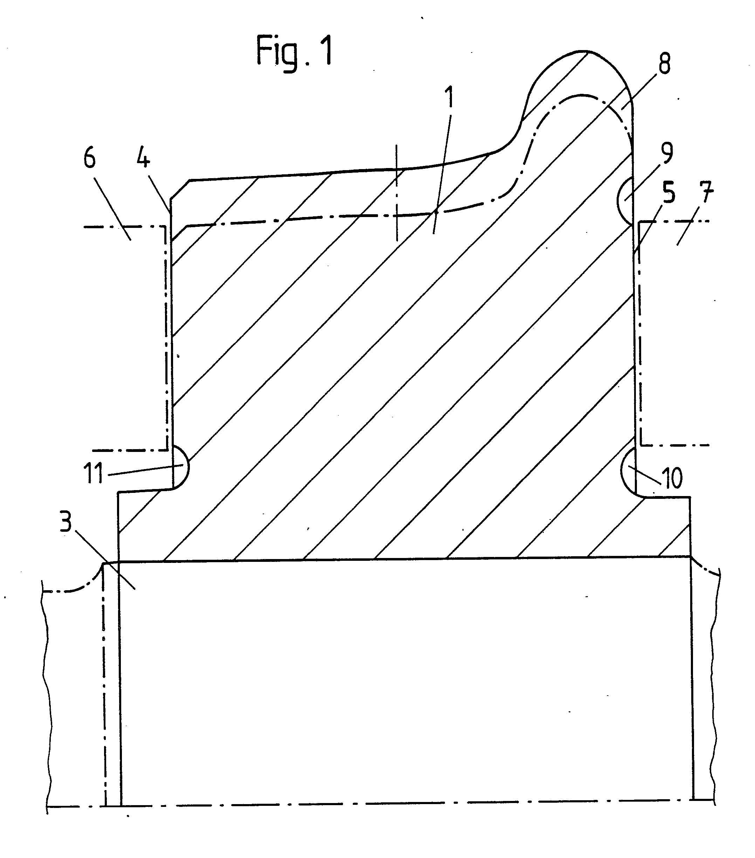

Das in Figur 1 dargestellte Vollrad 1 für Schienenfahrzeuge sitzt mit seiner Nabe 2 mit Schrumpfsitz auf einer strichpunktiert dargestellten Radwelle 3. Die beiden Stirnseiten des Radkörpers bilden Reibflächen 4,5 für strichpunktiert dargestellte Bremsbacken 6,7 der Scheibenbremse. Die an der Seite des Spurkranzes 8 liegende Reibfläche 5 ist durch eine äußere Ringnut 9 von dem Spurkranz 8 und durch eine innere Ringnut 10 von der Nabe 2 thermisch und spannungsmäßig entkoppelt, während die an der spurkranzabgewandten Seite liegende Reibfläche 4 durch eine Ringnut 11 nur von der Nabe 2 abgekoppelt ist.

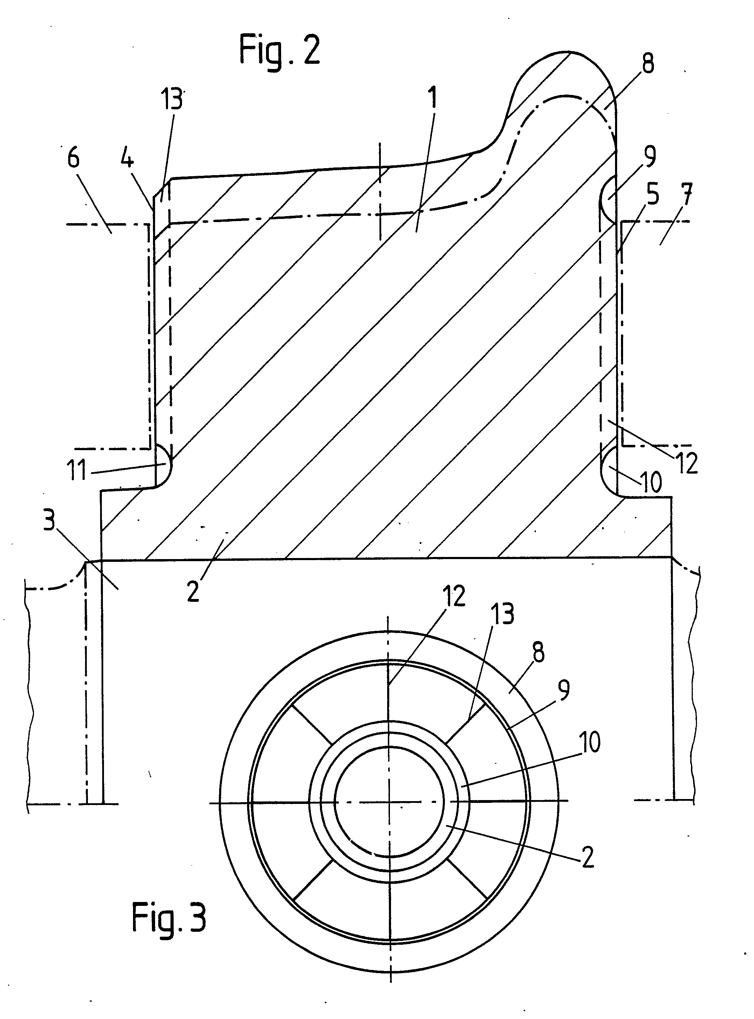

Beim Ausführungsbeispiel der Figuren 2 und 3 sind, soweit dieses mit dem Ausführungsbeispiel der Figur 1 übereinstimmt, gleiche Bezugszeichen verwendet worden. Der einzige Unterschied zum Ausführungsbeispiel der Figur 1 besteht darin, daß die ringförmigen Reibflächen 4,5 durch eine Vielzahl von radial verlaufenden Nuten 12 in eine Vielzahl von ringsegmentförmigen Feldern 13,14 unterteilt sind.

Bei beiden Ausführungsbeispielen wird durch die Nuten 9,10,11,12 für die Reibflächen 4,5 die Möglichkeit geschaffen, sich bei Erwärmung auszudehen, ohne daß die angrenzenden Teile des Rades, wie Nabe und Spurkranz 8, gezwungen sind sich mitauszudehnen. Dadurch wird erreicht, daß Wärmespannungen an den Übergängen zwischen den nicht erwärmten Teilen und den erwärmten Teilen weitgehend vermindert werden können.

**Ansprüche**

1. Scheibengebremstes Vollrad für kleinrädrige Schienenfahrzeuge, wie Niederflurwagen, mit von den Stirnseiten gebildeten Reibflächen für die Scheibenbremse,
**dadurch gekennzeichnet,** daß die Reibflächen (4,5) jeweils durch eine oder mehrere Nuten (9,10,11,12) von den benachbarten äußeren und/oder inneren Teilen des Vollrades (1) thermisch und spannungsmäßig entkoppelt sind.

2. Scheibengebremstes Vollrad nach Anspruch 1,
**dadurch gekennzeichnet,** daß die der spurkranzseitigen Reibfläche (5) zugeordnete Nut als Ringnut ausgebildet ist und zwischen dem Spurkranz (8) und der Reibfläche (5) liegt.

3. Scheibengebremstes Vollrad nach Anspruch 1 oder 2,
**dadurch gekennzeichnet,** daß eine als Ringnut ausgebildete Nut (10,11) zwischen der Reibfläche (4,5) und der Nabe (2) liegt.

4. Scheibengebremstes Vollrad nach einem der Ansprüche 1 bis 3,
**dadurch gekennzeichnet,** daß die Reibflächen (4,5) durch radiale Nuten (12,13) in mehrere Felder aufgeteilt sind.

# Fig. 1

Fig. 2

Fig. 3